# EUROPÄISCHE PATENTSCHRIFT

(11) **EP 3 244 110 B1**
(45) Veröffentlichungstag und Bekanntmachung des Hinweises auf die Patenterteilung: **17.07.2019**
(21) Anmeldenummer: 17168484.8
(22) Anmeldetag: 27.04.2017
(51) Int. Cl.: F16K 31/34

(54) **SCHWIMMERVENTIL**
FLOAT VALVE
VALVE À FLOTTEUR

(30) Priorität: 11.05.2016 DE 102016108674
(43) Veröffentlichungstag der Anmeldung: 15.11.2017
(73) Patentinhaber: A. u. K. Müller GmbH & Co. KG, 40595 Düsseldorf (DE)
(72) Erfinder:
(74) Vertreter: Feder Walter Ebert

(56) Entgegenhaltungen:
- EP-B1- 0 929 722

## Beschreibung

Die vorliegende Erfindung betrifft ein Schwimmerventil mit einem über ein Vorsteuerventil ansteuerbaren Hauptventil und einem Schwimmer zum Betätigen des Vorsteuerventils. Einen weiteren Gegenstand der Erfindung bildet ein Fluidtank mit einem Fluidbehälter und einem Schwimmerventil.

Derartige Schwimmerventile werden in vielen Bereichen der Technik zum Schalten von Fluidströmen eingesetzt. Hauptanwendungsbereich sind solche Fälle, in denen ein bestimmtes Fluidniveau innerhalb eines Fluidtanks auf einem konstanten Niveau gehalten werden soll. Hierzu wird innerhalb des Fluidtanks der Schwimmer angeordnet, welcher auf der Oberfläche des Fluids schwimmt und sich entsprechend des jeweiligen Fluidniveaus nach oben oder nach unten bewegt.

Diese Bewegungen des Schwimmers werden zum Betätigen des Vorsteuerventils und damit zum Schalten des Hauptventils genutzt, wodurch sich der Fluidstand innerhalb des Fluidtanks auf einem gewissen Niveau einpegeln lässt.

Aus der EP 0 929 722 B1 ist ein Füllventil für einen Wasserspeichertank mit einem Schwimmergehäuse, einem Ventilgehäuse und einer kombinierten Füllventil- und Steigleitungsanordnung zur Steuerung von Wasserstand in einem Speichertank für Spülsysteme bekannt.

Aus der DE 196 52 496 A1 ist ein Schwimmerventil mit einem Hauptventil größeren Strömungsquerschnitts und einem Vorsteuerventil kleineren Strömungsquerschnitts bekannt, bei welchem das größere Hauptventil über das kleinere Vorsteuerventil in bekannter Weise nach dem Servoprinzip ansteuerbar ist. Der zur Betätigung des Vorsteuerventils dienende Schwimmer ist nach Art einer Hohlkugel ausgebildet und mit dem Vorsteuerventil über einen auf dessen Ventilöffnung wirkenden Vorsteuerkolben gekoppelt.

Diese Art von Schwimmerventilen hat sich in der Vergangenheit zwar durchaus bewährt, weist jedoch insbesondere im Falle von Anwendungen, bei denen sich die Fluidstände innerhalb des Fluidtanks rasch ändern, gewisse Nachteile auf. Denn bei solchen Anwendungen kann es innerhalb des Fluidtanks zur Wellenbildung oder ähnlichen Phänomenen kommen, aufgrund welcher der Schwimmer innerhalb des Fluidtanks auf und ab bewegt wird, ohne dass sich das Fluidniveau wesentlich ändert. Hierdurch kann es zu unnötigen Schaltvorgängen des Hauptventils kommen, was in ungünstigen Situationen zu einem mehrfachen Öffnen und Schließen des Hauptventils führt.

**Aufgabe** der vorliegenden Erfindung ist es, ein Schwimmerventil wie auch einen Fluidtank anzugeben, bei welchen ungewollte Schaltvorgänge des Hauptventils vermieden werden.

Diese Aufgabe wird bei einem Schwimmerventil der eingangs genannten Art dadurch **gelöst**, dass der Schwimmer in einem Vorsteuertank angeordnet ist.

Durch die Anordnung des Schwimmers in einem separaten Vorsteuertank befindet sich dieser in einem geschützten Bereich, wodurch sich ungewollte Schaltvorgänge vermeiden lassen. Wellenbewegungen und ähnliche Phänomene werden nicht ungefiltert auf den Schwimmer übertragen, so dass das Hauptventil nur öffnet, wenn dies aufgrund eines sinkenden Fluidniveaus auch erwünscht ist.

Erfindungsgemäß ist der Vorsteuertank nach unten und nach oben offen ausgebildet. Von unten her kann das Fluid des Fluidtanks durch eine Öffnung in den Vorsteuertank eintreten und durch die weiter oben liegende Öffnung die Luft aus dem Vorsteuertank entweichen.

Für ein günstiges Schaltverhalten des Schwimmerventils ist es vorgesehen, dass im Bereich einer unteren Öffnung des Vorsteuertanks eine Blende zur Einstellung des Öffnungsquerschnitts der Öffnung angeordnet ist. Über den Öffnungsquerschnitt lässt sich das Einströmverhalten des in den Vorsteuertank eintretenden Fluids beeinflussen. Hierdurch kann beispielsweise eine bestimmte Hysterese derart eingestellt werden, dass das Hauptventil immer erst mit einer gewissen Verzögerung auf einen steigenden oder fallenden Fluidstand innerhalb des Fluidtanks reagiert.

Eine in diesem Zusammenhang konstruktiv vorteilhafte Ausgestaltung sieht vor, dass die Blende als gegeneinander verdrehbar angeordnetes Lochscheibenpaar ausgebildet ist. Die beiden Lochscheiben können drehbar innerhalb der Öffnung gelagert werden, wobei durch Verdrehen einer der beiden Lochscheiben ein anderer Öffnungsquerschnitt erreicht werden kann.

Darüber hinaus wird vorgeschlagen, dass der Vorsteuertank mindestens eine Führungsfläche zum Führen der Bewegungen des Schwimmers in dem Vorsteuertank aufweist. Hierdurch lassen sich definierte Bewegungen des Schwimmers erreichen, auch wenn der Schwimmer ansonsten nach oben und unten frei bewegbar innerhalb des Tanks angeordnet ist.

Eine weitere vorteilhafte Ausgestaltung sieht vor, dass das Vorsteuerventil an dem Vorsteuertank angeordnet und über eine Vorsteuerleitung mit dem Hauptventil verbunden ist. Bei der Vorsteuerleitung kann es sich um eine starre Rohrleitung oder eine nach Art eines flexiblen Schlauchs ausgebildete Rohrleitung handeln, die sich sowohl in Länge als auch Durchmesser an die jeweiligen Gegebenheiten auf einfache Weise anpassen lässt.

Eine besonders vorteilhafte Ausgestaltung sieht in diesem Zusammenhang vor, dass das Vorsteuerventil und der Vorsteuertank eine wahlweise platzierbare Vorsteuereinheit bilden. Auf diese Weise ist es möglich, das Hauptventil und die übrigen Komponenten des Schwimmerventils an einem vorbestimmten Ort anzuordnen und die den Schaltvorgang des Hauptventils initiierende Vorsteuereinheit wahlweise an einem anderen Ort zu platzieren. Hier können insbesondere Bereiche gewählt werden, die sich durch eine nur geringe Wellenbildung auszeichnen. Auch können bauraumbedingt Bereiche mit ausreichend Platz zur Unterbringung der entsprechenden Komponenten gewählt werden.

Eine weitere Ausgestaltung sieht vor, dass das Vorsteuerventil und der Schwimmer über einen Hebel miteinander zusammenwirken.

In diesem Zusammenhang wird weiter vorgeschlagen, dass das eine Ende des Hebels mit dem Schwimmer wirkgekoppelt und das andere Ende des Hebels ein Schließelement für den Ventilsitz des Vorsteuerventils aufweist. Das mit dem Schwimmer wirkgekoppelte Ende kann beispielsweise lose auf einer Oberseite des Schwimmers aufliegen.

Vorteilhafterweise sind ferner Mittel zur Rückflussverhinderung in das Vorsteuerventil vorgesehen. Beim Schließen des Vorsteuerventils können kritisehe Situationen dann entstehen, wenn das sich hinter dem Vorsteuerventil befindende Fluid über das Vorsteuerventil in den Vorlauf des Leitungssystems zurückströmen kann. Kritisch kann dies insbesondere im Falle von Verkeimungen oder in sonstiger Weise schädlichen oder toxischen Fluidgemischen innerhalb des Fluidtanks sein, die aus hygienischen Gründen nicht über das Vorsteuerventil rückfließen dürfen.

In diesem Zusammenhang ist es von Vorteil, wenn das Mittel zur Rückflussverhinderung ein mechanisch arbeitender Rückflussverhinderer und/oder eine Lufttrennstrecke ist. Bei dem mechanisch arbeitenden Rückflussverhinderer kann es sich um eine Art Rückschlagventil handeln, das nur in einer Richtung öffnet, in der anderen Richtung jedoch jegliche Strömung unterbindet. Von Vorteil kann auch eine Luftrennstrecke sein. Eine derartige Lufttrennstrecke kann dadurch gebildet sein, dass das aus der Öffnung des Vorsteuerventils austretende Fluid unter dem Einfluss der Schwerkraft entlang einer Luftstrecke nach unten tropft, bevor es dort auf stehendes Fluid trifft. Auch auf diese Weise kann ein Rückfluss über die Öffnung des Vorsteuerventils ebenfalls verhindert werden.

Bei einem Fluidtank der eingangs genannten Art wird zur **Lösung** der vorstehend genannten Aufgabe vorgeschlagen, dass dieses ein Schwimmerventil nach einem der vorhergehenden Ansprüche aufweist. Es ergeben sich die wie bereits im Zusammenhang mit dem Schwimmerventil erläuterten Vorteile.

Eine vorteilhafte Anordnung sieht vor, dass das Hauptventil und die Vorsteuereinheit an verschiedenen Wänden des Fluidbehälters angeordnet sind. Auf diese Weise wird der Vorsteuertank der Vorsteuereinheit durch das über das Hauptventil einströmende Fluid nicht direkt angeströmt.

Eine weitere vorteilhafte Anordnung sieht vor, dass das Hauptventil an dem Fluidtank und die Steuereinheit an einem mit dem Fluidtank verbundenen Steigrohr angeordnet sind. Bei dem Steigrohr kann es sich um ein starres Rohr oder um ein nach Art eines flexiblen Schlauches ausgebildetes Steigrohr handeln. Das Steigrohr kann im unteren Bereich des Fluidtanks mit diesem strömungsverbunden sein und nach oben abgewinkelt an dessen freien Ende die Steuereinheit aufnehmen. Es ergibt sich ein sehr günstiges, durch Wellenbewegungen innerhalb des Fluidbehälters nicht beeinträchtigtes Schaltverhalten.

Weitere Einzelheiten und Vorteile eines erfindungsgemäßen Schwimmerventils sowie eines mit einem solchen Schwimmerventil ausgestatteten Fluidtanks werden nachfolgend unter Zuhilfenahme der beigefügten Zeichnungen von Ausführungsbeispielen erläutert werden. Darin zeigen:
- Fig. 1: ein Schwimmerventil gemäß einer ersten Ausgestaltung in geschlossener Stellung,
- Fig. 2: das Schwimmerventil gemäß Fig. 1 in geöffneter Stellung,
- Fig. 3: eine alternative Ausgestaltung eines Vorsteuertanks,
- Fig. 4: eine weitere Ausgestaltung eines Vorsteuertanks,
- Fig. 5: eine Ansicht eines ersten Ausführungsbeispiels eines mit einem Schwimmerventil versehenen Fluidtanks,
- Fig. 6: eine alternative Ausgestaltung eines mit einem Schwimmerventil versehenen Fluidtanks.

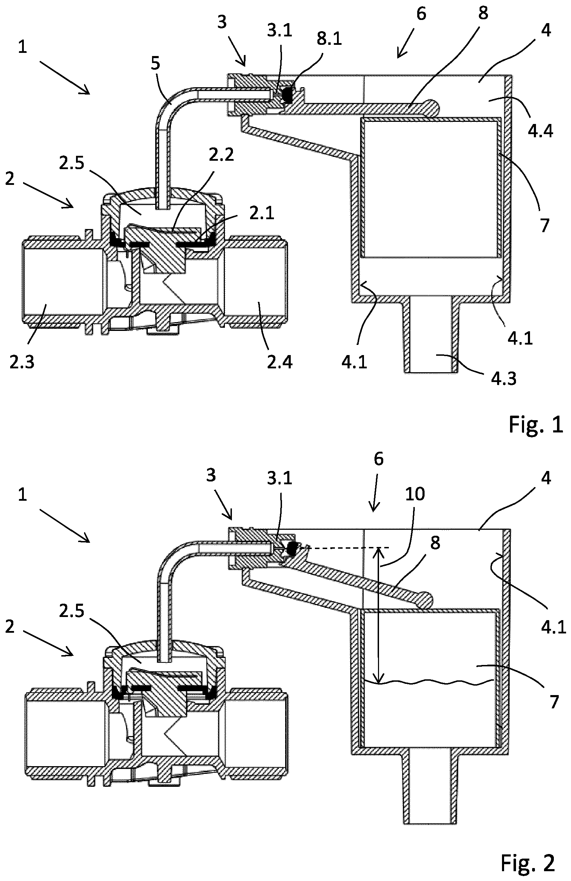

In den Fig. 1 und 2 ist ein erfindungsgemäßes Schwimmerventil 1 in schematisierter, geschnittener Ansicht gezeigt.

Das Schwimmerventil 1 weist ein Hauptventil 2 größeren Strömungsquerschnitts und ein Vorsteuerventil 3 kleineren Strömungsquerschnitts auf, wobei die Betätigung des Vorsteuerventils 3 über einen beim Ausführungsbeispiel topfförmig ausgebildeten Schwimmer 7 erfolgt.

Das Hauptventil 2 umfasst in bekannter Weise einen in etwa ringförmig ausgebildeten Hauptventilsitz 2.1 und ein mit dem Ventilsitz 2.1 zusammenwirkendes Schließelement 2.2, welches sich dichtend von oben her auf den Ventilsitz 2.1 legt. Solange das Schließelement 2.2 an dem Ventilsitz 2.1 anliegt, ist der Weg zwischen dem Ventileinlass 2.3 und dem Ventilauslass 2.4 blockiert, das Hauptventil 2 also geschlossen. Zum Öffnen des Hauptventils 2 ist es erforderlich, den Druck innerhalb einer Druckkammer 2.5 des Hauptventils 2 abzusenken, die auf der dem Ventilsitz 2.1 gegenüberliegenden Seite des Schließelements 2.2 vorgesehen ist. Durch Druckentlastung innerhalb des Druckraums 2.5 hebt das Schließelement 2.2 aufgrund der bestehenden Flächenverhältnisse und dem Druck des am Ventileinlass 2.3 anliegenden Fluids selbsttätig von dem Ventilsitz 2.1 ab. Sobald sich allerdings innerhalb des Druckraums 2.5 erneut ein Druck aufbaut, legt es sich auch wieder selbsttätig an dem Ventilsitz 2.1 an und verschließt auf diese Weise das Hauptventil 2.

Zum Ändern der Druckverhältnisse innerhalb des Druckraums 2.5 und damit zum Betätigen des Hauptventils 2 dient das Vorsteuerventil 3. Der Druck innerhalb des Druckraums 2.5 lässt sich durch Öffnen des Ventilsitzes 3.1 des Vorsteuerventils 3 absenken. Hierzu ist das Hauptventil 2 mit dem Vorsteuerventil 3 über eine Vorsteuerleitung 5 verbunden. Bei der Vorsteuerleitung 5 kann es sich um ein starres Rohr oder um ein flexibles Schlauchelement handeln. Die Länge der Vorsteuerleitung 5 kann je nach Anwendungsfall und Position des Vorsteuertanks 4 beliebig lang gewählt werden.

Zum Öffnen und Schließen des Ventilsitzes 3.1 des Vorsteuerventils 3 dient der in einem Vorsteuertank 4 angeordnete Schwimmer 7, worauf nachfolgend im Einzelnen eingegangen werden wird.

Sowohl das Vorsteuerventil 3 als auch der Schwimmer 7 sind innerhalb des Vorsteuertanks 4 angeordnet. Der Vorsteuertank 4 ist von trichterförmiger Geometrie und kann innerhalb eines größeren Fluidtanks derart angeordnet werden, dass über eine untere Öffnung 4.3 Fluid in das Innere des Fluidtanks 4 strömt. Um der in dem Vorsteuertank 4 enthaltenen Luft ein Entweichen zu ermöglichen, ist auch eine obere Öffnung 4.4 vorgesehen.

Entsprechend des sich innerhalb des Vorsteuertanks 4 ändernden Fluidniveaus bewegt sich der Schwimmer 7 nach oben oder nach unten. Um definierte Bewegungen des Schwimmers 7 zu erreichen, ist mindestens eine Führungsfläche 4.1 vorgesehen. Bei einem rotationssymmetrisch ausgebildeten Schwimmer 7 reicht eine zylindrisch ausgebildete Führungsfläche 4.1. Im Falle andersartiger Schwimmergeometrien können auch mehrere Führungsflächen 4.1 vorgesehen sein.

Das Vorsteuerventil 3 und der Schwimmer 7 sind über einen schwenkbar gelagerten Hebel 8 miteinander gekoppelt. Der Hebel 8 ist an seinem freien Ende mit dem Schwimmer 7 derart wirkverbunden, dass er dessen Bewegungen innerhalb des Vorsteuertanks 4 folgt. Beim Ausführungsbeispiel liegt das Ende hierzu auf der Oberseite des Schwimmers 7 lose auf. Das andere Ende des Hebels 8 weist ein Schließelement 8.1 zum Schließen des Ventilsitzes 3.1 des Vorsteuerventils 3 auf. Das Schließelement 8.1 besteht aus einem Gummi- oder Elastomermaterial und ist gemäß der Ausgestaltung in den Figuren 1 und 2 von insgesamt halbkugelförmiger Geometrie.

In der in Fig. 1 dargestellten Stellung liegt das Schließelement 8.1 an dem Ventilsitz 3.1 des Vorsteuerventils 3 an. Dies entspricht der oberen Endstellung des Schwimmers 7. Sobald der Flüssigkeitsstand innerhalb des in den Fig. 1 und 2 nicht dargestellten Fluidtanks absinkt, bewegt sich auch der Schwimmer 7, geführt über die Führungsflächen 4.1, innerhalb des Fluidtanks 4 nach unten. Dabei beginnt sich der Hebel 8 nach unten zu verschwenken. Das Schließelement 8.1 hebt von dem Ventilsitz 3.1 ab und gibt die Öffnung des Vorsteuerventils 3 frei. Diese Stellung ist in Fig. 2 gezeigt. Aufgrund der veränderten Druckverhältnisse innerhalb des Druckraums 2.5 wird in dieser Stellung auch das Hauptventil 2 geöffnet und dem Fluidtank solange Fluid zugeführt, bis der Schwimmer 7 wieder in dessen in Fig. 1 dargestellte Stellung angehoben wird und den Ventilsitz 3.1 des Vorsteuerventils 3 schließt. Aufgrund der erneut veränderten Druckverhältnisse schließt dann auch das Hauptventil 2.

Von besonderem Vorteil bei dem vorliegenden Schwimmerventil ist, dass das Vorsteuerventil 3 und der Vorsteuertank 4 einschließlich des Schwimmers 7 sowie des Hebels 8 als eine gemeinsam montierbare Vorsteuereinheit 6 ausgebildet sind.

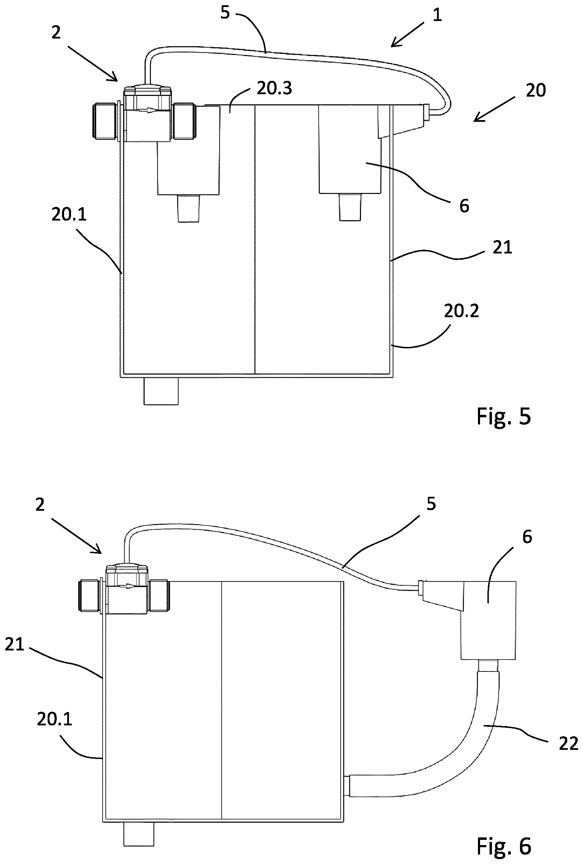

Die Vorsteuereinheit 6 kann nach Belieben an unterschiedlichsten Positionen innerhalb eines Fluidtanks oder auch außerhalb eines Fluidtanks angeordnet werden, was nachfolgend anhand der Darstellungen in den Fig. 5 und 6 noch näher erläutert werden wird. Hierzu ist es lediglich erforderlich, die Länge der Vorsteuerleitung 5 an die jeweilige Position der Vorsteuereinheit 6 anzupassen. Auf diese Weise kann die Vorsteuereinheit 6 in besonders günstig erscheinenden Bereichen eines Fluidtanks angeordnet werden, in welchen beispielsweise größerer Wellengang oder ähnliche das Schaltungsverhalten des Hauptventils 2 störende Einflüsse nicht zu erwarten sind.

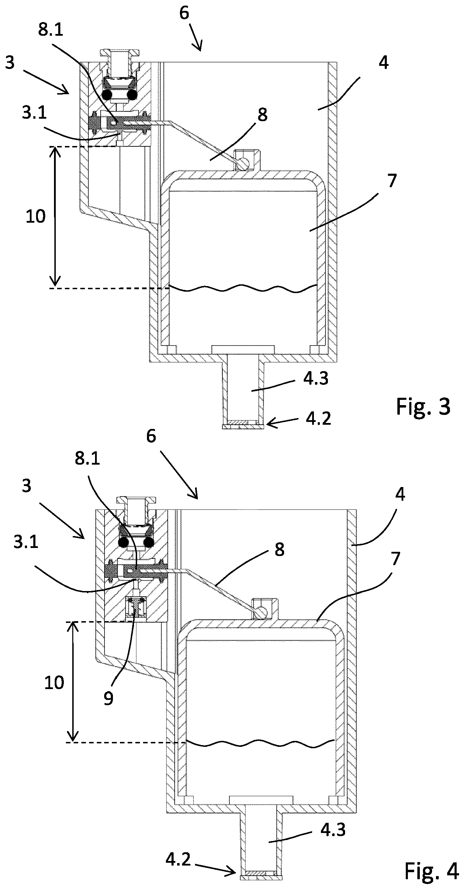

Die Fig. 3 und 4 zeigen alternative Ausführungen einer Vorsteuereinheit 6. Bei der Ausgestaltung gemäß Fig. 3 ist das eine Ende des Hebels 8 mit dem Schwimmer 7 gekoppelt und das andere Ende des Hebels 8 mit einem membranartigen Schließelement 8.1 verbunden. Während das Schließelement 8.1 bei der Ausgestaltung gemäß den Fig. 1 und 2 als Propfen ausgebildet war, handelt es sich bei dieser Ausgestaltung um ein nach Art einer Membrane ausgebildetes Schließelement 8.1. Das Schließelement 8.1 weist in seinem radial äußeren Bereich einen umlaufenden Dichtbereich auf. In der Mitte befindet sich ein in etwa tellerförmiger Dichtbereich, der auf der dem Hebel 8 zugewandte Seite mit dem Dichtbereich einstückig verbunden ist. Beim Bewegen des Hebels 8 schwenkt der tellerförmige Dichtbereich nach oben oder nach unten und öffnet oder Schließt dabei den Ventilsitz 3.1 des Vorsteuerventils 3. Ähnlich ist auch die Ausgestaltung gemäß Fig. 4.

Im Zulauf der unteren Öffnung 4.3 des Vorsteuertanks 4 ist bei der Ausgestaltung in den Figuren 3 und 4 eine Blende 4.2 vorgesehen. Über die Blende 4.2 lässt sich zur Einstellung einer gewissen Hysterese der Öffnungsquerschnitt der Öffnung 4.3 verändern. Beim Ausführungsbeispiel besteht die Blende aus einem Lochscheibenpaar mir zwei gegeneinander verdrehbar angeordneten Lochscheiben.

Die Ausgestaltungen gemäß den Fig. 1 und 2, 3 sowie 4 unterscheiden sich hinsichtlich unterschiedlicher Mittel zur Rückflussverhinderung.

In den Fig. 1 und 2 wird ein Rückfluss beim Schließen des Vorsteuerventils 3 über eine Lufttrennstrecke 10 erreicht. Bei der Ausführung gemäß Fig. 3 ist ebenfalls eine Lufttrennstrecke 10 vorgesehen. Bei der Ausgestaltung gemäß Fig. 4 ist zusätzlich zur Luftrennstrecke 10 noch ein mechanischer Rückflussverhinderer 9 vorgesehen. Der mechanische Rückflussverhinderer 9 arbeitet ähnlich einem Rückschlagventil und erlaubt ein Durchströmen nur in einer Richtung. In der anderen Richtung werden Strömungen blockiert.

In den Fig. 5 und 6 sind zwei unterschiedliche Ausgestaltungen von Fluidtanks 20 dargestellt.

Der Fluidtank 20 gemäß Fig. 5 weist einen Fluidbehälter 21 auf, an dessen in Fig. 5 linker Wand 20.1 in deren oberen Endbereich das Hauptventil 2 des Schwimmerventils 1 angeordnet ist. Die die Vorsteuereinheit 6 des Schwimmerventils 1 befindet sich an der gegenüberliegenden Wand 20.2 des Fluidbehälters 21. Auch eine Anordnung der Vorsteuereinheit 6 an einer anderen Wand 20.3 wäre ohne Weiteres denkbar. Hierzu wäre lediglich die Länge der Vorsteuerleitung 5 entsprechend anzupassen

Im Gegensatz dazu zeigt die Darstellung in Fig. 6 eine Anordnung der Vorsteuereinheit 6 neben dem Fluidbehälter 21 des Fluidtanks 20. Bei dieser Anordnung ist das Hauptventil 2 ebenfalls an einer Wand 20.1 des Fluidbehälters 20 angeordnet. Die Vorsteuereinheit 6 befindet sich jedoch räumlich getrennt von dem Fluidbehälter 20. Hierzu ist ein Steigrohr 22 vorgesehen, dessen eines Ende mit dem Fluidtank 20 strömungsverbunden ist und dessen anderes Ende die Vorsteuereinheit 6 aufweist. Das Steigrohr 22 kann als starres Rohr oder als schlauchförmiges Element ausgebildet sein.

Die vorstehend beschriebenen Ausführungen eines Schwimmerventils 1 sowie eines entsprechenden Fluidtanks 20 zeichnen sich durch ein günstiges und wenig störanfälliges Schaltverhalten des Hauptventils 2 aus. Selbst bei innerhalb des Fluidtanks 20 auftretendem, stärkerem Wellengang übertragen sich diese Wellen nicht unmittelbar auf den innerhalb des Vorsteuertanks 4 angeordneten Schwimmer 7. Ungewünschte Schaltvorgänge werden damit vermieden.

### Bezugszeichen:

- 1: Schwimmerventil
- 2: Hauptventil
- 2.1: Ventilsitz
- 2.2.: Schließelement
- 2.3.: Einlass
- 2.4.: Auslass
- 2.5: Druckraum
- 3: Vorsteuerventil
- 3.1: Ventilsitz
- 4: Vorsteuertank
- 4.1: Führungsfläche
- 4.2: Blende
- 4.3: Öffnung
- 4.4: Öffnung
- 5: Vorsteuerleitung
- 6: Vorsteuereinheit
- 7: Schwimmer
- 8: Hebel
- 8.1: Schließelement
- 9: Mittel, Rückflussverhinderer
- 10: Mittel, Lufttrennstrecke

- 20: Fluidtank
- 20.1: Wand
- 20.2: Wand
- 20.3: Wand
- 21: Fluidbehälter
- 22: Steigrohr

## Patentansprüche

1. Schwimmerventil mit einem Vorsteuerventil (3), einem über das Vorsteuerventil (3) ansteuerbaren Hauptventil (2), einem Vorsteuertank (4) und einem Schwimmer (7) zum Betätigen des Vorsteuerventils (3), wobei der Schwimmer (7) in dem Vorsteuertank (4) angeordnet ist und der Vorsteuertank (4) nach unten und nach oben offen ausgebildet ist,
**dadurch gekennzeichnet,**
**dass** im Bereich einer unteren Öffnung (4.3) des Vorsteuertanks (4) eine einstellbare Blende (4.2) zur Veränderung des Öffnungsquerschnitts der Öffnung (4.3) angeordnet ist.

2. Schwimmerventil nach Anspruch 1, **dadurch gekennzeichnet, dass** die Blende (4.2) als gegeneinander verdrehbar angeordnetes Lochscheibenpaar ausgebildet ist.

3. Schwimmerventil nach einem der vorhergehenden Ansprüche,
**dadurch gekennzeichnet, dass** der Vorsteuertank (4) mindestens eine Führungsfläche (4.1) zum Führen der Bewegungen des Schwimmers (7) in dem Vorsteuertank (4) aufweist.

4. Schwimmerventil nach einem der vorhergehenden Ansprüche,
**dadurch gekennzeichnet, dass** das Vorsteuerventil (3) an dem Vorsteuertank (4) angeordnet und über eine Vorsteuerleitung (5) mit dem Hauptventil (2) verbunden ist.

5. Schwimmerventil nach einem der vorhergehenden Ansprüche,
**dadurch gekennzeichnet, dass** das Vorsteuerventil (3) und der Vorsteuertank (4) eine wahlweise platzierbare Vorsteuereinheit (6) bilden.

6. Schwimmerventil nach einem der vorhergehenden Ansprüche,
**dadurch gekennzeichnet, dass** das Vorsteuerventil (3) und der Schwimmer (7) über einen Hebel (8) miteinander zusammenwirken.

7. Schwimmerventil nach Anspruch 6, **dadurch gekennzeichnet, dass** das eine Ende des Hebels (8) mit dem Schwimmer (7) wirkverbunden und das andere Ende des Hebels (7) ein Schließelement (8.1) für den Ventilsitz (3.1) des Vorsteuerventils (3) aufweist.

8. Schwimmerventil nach einem der vorhergehenden Ansprüche, **gekennzeichnet durch** Mittel (9, 10) zur Rückflussverhinderung in das Vorsteuerventil (3).

9. Schwimmerventil nach Anspruch 8, **dadurch gekennzeichnet, dass** das Mittel (9, 10) ein mechanisch arbeitender Rückflussverhinderer (9) und/oder eine Lufttrennstrecke (10) ist.

10. Fluidtank mit einem Fluidbehälter (21) und einem Schwimmerventil (1) nach einem der vorhergehenden Ansprüche.

11. Fluidtank nach Anspruch 10, **dadurch gekennzeichnet, dass** das Hauptventil (2) und die Vorsteuereinheit (6) an verschiedenen Wänden des Fluidbehälters (21) angeordnet sind.

12. Fluidtank nach Anspruch 10, **dadurch gekennzeichnet, dass** das Hauptventil (2) an dem Fluidtank (21) und die Steuereinheit (6) an einem mit dem Fluidtank (21) verbundenen Steigrohr (22) angeordnet ist.

## Claims

1. Float valve having a pilot control valve (3), having a main valve (2) which is able to be activated via the pilot control valve (3), having a pilot control tank (4) and having a float (7) for actuating the pilot control valve (3), wherein the float (7) is arranged in the pilot control tank (4) and the pilot control tank (4) is of downwardly and upwardly open form,
**characterized**
**in that** arranged in the region of a lower opening (4.3) of the pilot control tank (4) is a settable baffle (4.2) for changing the opening cross section of the opening (4.3).

2. Float valve according to Claim 1, **characterized in that** the baffle (4.2) is formed as a pair of perforated plates arranged so as to be rotatable with respect to one another.

3. Float valve according to one of the preceding claims, **characterized in that** the pilot control tank (4) has at least one guide surface (4.1) for guiding the movements of the float (7) in the pilot control tank (4).

4. Float valve according to one of the preceding claims, **characterized in that** the pilot control valve (3) is arranged on the pilot control tank (4) and is connected to the main valve (2) via a pilot control line (5).

5. Float valve according to one of the preceding claims, **characterized in that** the pilot control valve (3) and the pilot control tank (4) form a selectively placeable pilot control unit (6).

6. Float valve according to one of the preceding claims, **characterized in that** the pilot control valve (3) and the float (7) interact with one another via a lever (8).

7. Float valve according to Claim 6, **characterized in that** one end of the lever (8) is operatively connected to the float (7) and the other end of the lever (7) has a closure element (8.1) for the valve seat (3.1) of the pilot control valve (3).

8. Float valve according to one of the preceding claims, **characterized by** means (9, 10) for preventing backflow into the pilot control valve (3).

9. Float valve according to Claim 8, **characterized in that** the means (9, 10) are/is a mechanically operating backflow preventer (9) and/or an air separation section (10).

10. Fluid tank having a fluid container (21) and a float valve (1) according to one of the preceding claims.

11. Fluid tank according to Claim 10, **characterized in that** the main valve (2) and the pilot control unit (6) are arranged on different walls of the fluid container (21).

12. Fluid tank according to Claim 10, **characterized in that** the main valve (2) is arranged on the fluid tank (21) and the control unit (6) is arranged on a riser pipe (22) which is connected to the fluid tank (21).

## Revendications

1. Valve à flotteur comprenant une valve pilote (3), une valve principale (2) pouvant être commandée par le biais de la valve pilote (3), un réservoir pilote (4) et un flotteur (7) pour actionner la valve pilote (3), le flotteur (7) étant disposé dans le réservoir pilote (4) et le réservoir pilote (4) étant réalisé sous forme ouverte vers le bas et vers le haut,
**caractérisée en ce que**
dans la région d'une ouverture inférieure (4.3) du réservoir pilote (4) est disposé un diaphragme ajustable (4.2) pour modifier la section transversale d'ouverture de l'ouverture (4.3).

2. Valve à flotteur selon la revendication 1, **caractérisée en ce que** le diaphragme (4.2) est réalisé sous la forme d'une paire de disques perforés disposés de manière à pouvoir tourner l'un par rapport à l'autre.

3. Valve à flotteur selon l'une quelconque des revendications précédentes,
**caractérisée en ce que** le réservoir pilote (4) présente au moins une surface de guidage (4.1) pour guider les déplacements du flotteur (7) dans le réservoir pilote (4).

4. Valve à flotteur selon l'une quelconque des revendications précédentes,
**caractérisée en ce que** la valve pilote (3) est disposée au niveau du réservoir pilote (4) et est connectée par le biais d'une conduite pilote (5) à la valve principale (2).

5. Valve à flotteur selon l'une quelconque des revendications précédentes,
**caractérisée en ce que** la valve pilote (3) et le réservoir pilote (4) forment une unité pilote (6) pouvant être placée de manière libre.

6. Valve à flotteur selon l'une quelconque des revendications précédentes,
**caractérisée en ce que** la valve pilote (3) et le flotteur (7) coopèrent l'un avec l'autre par le biais d'un levier (8).

7. Valve à flotteur selon la revendication 6, **caractérisée en ce que** l'une des extrémités du levier (8) est en liaison fonctionnelle avec le flotteur (7) et l'autre extrémité du levier (7) présente un élément de fermeture (8.1) pour le siège de valve (3.1) de la valve pilote (3).

8. Valve à flotteur selon l'une quelconque des revendications précédentes,
**caractérisée par** des moyens (9, 10) pour empêcher un reflux dans la valve pilote (3).

9. Valve à flotteur selon la revendication 8, **caractérisée en ce que** le moyen (9, 10) est un élément empêchant un reflux (9) fonctionnant de manière mécanique et/ou une section de séparation d'air (10).

10. Réservoir de fluide comprenant un récipient de fluide (21) et une valve à flotteur (1) selon l'une quelconque des revendications précédentes.

11. Réservoir de fluide selon la revendication 10, **caractérisé en ce que** la valve principale (2) et l'unité pilote (6) sont disposées sur des parois différentes du récipient de fluide (21).

12. Réservoir de fluide selon la revendication 10, **caractérisé en ce que** la valve principale (2) est disposée sur le réservoir de fluide (21) et l'unité de commande (6) est disposée sur un tube montant (22) connecté au réservoir de fluide (21).
